# EUROPEAN PATENT SPECIFICATION

(11) **EP 3 061 042 B1**
(45) Date of publication and mention of the grant of the patent: **28.06.2023**
(21) Application number: 14856608.6
(22) Date of filing: 20.10.2014
(51) Int. Cl.: H04L 12/14, H04M 15/00, H04W 4/24, H04L 67/306, H04W 4/14, G06F 21/55, G06Q 30/04, H04L 9/40, H04W 12/08, H04M 15/28, H04W 12/126, H04W 4/50, H04M 17/00, H04W 8/18, H04W 60/04

(54) **METHOD, USER EQUIPMENT AND SYSTEM FOR REVENUE MAXIMIZATION IN A COMMUNICATION NETWORK**
VERFAHREN, BENUTZERGERÄT UND SYSTEM ZUR UMSATZMAXIMIERUNG IN EINEM KOMMUNIKATIONSNETZWERK
PROCÉDÉ, ÉQUIPEMENT D'UTILISATEUR ET SYSTÈME D'OPTIMISATION DE REVENUS DANS UN RÉSEAU DE COMMUNICATION

(30) Priority: 21.10.2013 IN 4721CH2013
(43) Date of publication of application: 31.08.2016
(73) Proprietor: Subex Limited, Bangalore 560037 (IN)
(72) Inventor: PADMANABHAN, Vinod Kumar, Bangalore 560037 (IN); KRISHNA, Jandhyala Gowri, Bangalore 560037 (IN); PULIKUNNEL, Kiran Zachariah, Bangalore 560037 (IN)
(74) Representative: dompatent von Kreisler Selting Werner - Partnerschaft von Patent- und Rechtsanwälten mbB
(86) International application number: PCT/IN2014/000668
(87) International publication number: WO 2015/059715

(56) References cited:
- WO-A1-2007/042226
- US-A1- 2004 116 117
- US-A1- 2006 270 404
- US-A1- 2008 163 340
- US-A1- 2010 227 588
- US-A1- 2011 055 565
- US-A1- 2012 109 882
- US-A1- 2013 080 891
- US-B1- 8 019 683

## Description

### FIELD OF INVENTION

This invention relates to management of communication networks and more particularly to managing a subscriber access of a User Equipment (UE) to at least one service in a communication network.

### BACKGROUND OF INVENTION

Subscribers of a wireless communication network access a variety of services using the network. The services may comprise of voice based services (such as voice calls in the home area, voice calls outside the home area and so on) or data based services (surfing the internet, chat sessions, map based services, Voice over Internet Protocol (IP) (VoIP) and so on). The network operators may charge the subscribers for accessing the services, which may be based on at least one of profile of the subscriber, plan to which the subscriber is subscribed and so on.

Currently, networks operators use a plurality of discrete components spread across the network to monitor the subscribers and charge the subscribers according to the services being availed. On the subscriber availing a service, the network component associated with the service creates a record corresponding to the service availed by the subscriber. Examples of the record are account name, network phone number of the subscriber, date of activation of the connection for the subscriber, IMSI (International Mobile Subscriber Identity), Equipment ID, QoS (Quality of Service), Status of the connection and so on. The network component further creates copies of the record to be processed by other network components and systems within the network (examples of the network components and systems comprise of rating, billing, fraud, revenue assurance and data warehouse systems).

In an example, consider a subscriber updating his services from a voice only plan to a voice and data plan. On the subscriber changing the plans, the network operator updates the billing system, mediation system, HLR (Home Location Register), CRMS (Customer Relationship Management), GGSN (Gateway GPRS (General Packet Radio Service) Support Node) and SGSN (Serving GPRS Support Node). Also, the network operator ensures that systems contain the same information.

The network operator maintains multiple copies of the records of the subscriber in each of the network components. This results in a huge consumption of space, hereby increasing the costs in terms of infrastructure (such as electronic storage components and associated electronic equipment, physical storage location to place the electronic storage components and so on). Also, all the records need to be synced, which further results in a huge bandwidth requirement for transferring the records for a huge number of users across the network at frequent intervals.

Further, analysis on the revenue from the services availed by the subscriber occur after the subscriber has availed the service by analyzing the records. There might be a possibility of missing out on some records or information on the records, which might result in a revenue loss for the network operator. Also, there might be services which might be availed in a fraudulent manner (either intentionally by the subscriber or unintentionally by the subscriber) which may not realize in revenue for the network operator (due to a dispute raised by the subscriber or any other reason by which the subscriber does not pay for the availed service).

US 2010/227588 discloses a method for using a SIM-based firewall to filter and regulate events that may occur in a wireless device or SIM card may include: reading configuration settings; registering with a wireless device, and starting timers; detecting an event; determining whether the event matches criteria for allowance; and, if the event matches, allowing the event. If the event is not allowed, the method may then comprise terminating the event; determining whether to notify the external interface; and potentially transmitting an indication to the external interface. Indications may also be transmitted to a remote system that the event was detected and/or blocked.

### OBJECT OF INVENTION

The principal object of this invention is to collect and profile information of a subscriber on a User Equipment (UE)/Universal Integrated Circuit Card (UICC), wherein the information may be used for revenue maximization applications for a network operator, wherein revenue maximization applications include but are not limited to fraud management, revenue assurance, churn management, customer experience management, credit risk management and partner settlement.

### STATEMENT OF INVENTION

The invention is set out in the appended set of claims 1-8.

Accordingly the invention provides a method and a User Equipment (UE) for managing a subscriber access of the User Equipment (UE) to at least one service in a communication network. The UE comprises a revenue management module, for profiling a usage of behavior of the UE with respect to network events based on stored summarization rules specified by a network operator of the UE. The revenue management module initiates at least one network event and checks whether the at least one network event violates at least one summarization rule. The summarization rule comprises heuristics and static information. The revenue management module performs at least one action, if the at least one network event violates the at least one summarization rule. The revenue management module creates a profile for the subscriber based on the at least one network event occurring on the UE and adds an entry in a database for the at least one network event. The revenue management module checks if there is the entry for the at least one network event in the at least one summarization rule and updates and enables the at least one network event to proceed in a normal manner, if the at least one network event matches the at least one summarization rule. The revenue management module enables the at least one network event to proceed without recording of the at least one network event, if the at least network event does not violate the at least one summarization rule and sends the information from the UE to the network operator.

There is also provided a User Equipment (UE) associated with a subscriber in a communication network, the UE configured for checking if the subscriber can avail a service; on the UE attempting to avail the services based on at least one rule stored in the LTE; performing at least one action related to the service based on the at least one rule stored in the UE.

Also, provided herein is a communication network configured for sending at least one rule to a User Equipment, wherein the UE uses the at least one rule to check if the subscriber can avail a service; on the UE attempting to avail the services.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the scope thereof, and the embodiments herein include all such modifications.

### BRIEF DESCRIPTION OF FIGURES

This invention is illustrated in the accompanying drawings, throughout which like reference letters indicate corresponding parts in the various figures. The embodiments herein will be better understood from the following description with reference to the drawings, in which:
FIG. 1 depicts a User Equipment (UE) connected to a network operator, according to embodiments as disclosed herein;
FIG. 2a depicts a User Equipment (UE) comprising a Universal Integrated Circuit Card (UICC), according to embodiments as disclosed herein;
FIG. 2b depicts a Universal Integrated Circuit Card (UICC), comprising of a revenue management module, according to embodiments as disclosed herein;
FIG. 3 depicts a LTE comprising a revenue management module, according to embodiments as disclosed herein;
FIG. 4 is a flowchart illustrating a process of the revenue management module receiving rules received from a network operator and storing the rules, according to embodiments as disclosed herein;
FIG. 5 is a flowchart illustrating a process of the revenue management module enforcing the rules on a subscriber availing services, according to embodiments as disclosed herein;
FIG. 6 is a flowchart illustrating the process of the revenue management module providing an alert to the network operator, according to embodiments as disclosed herein; and
FIG. 7 is a flowchart illustrating the process of maintaining a profile for the subscriber, according to embodiments as disclosed herein.

### DETAILED DESCRIPTION OF INVENTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

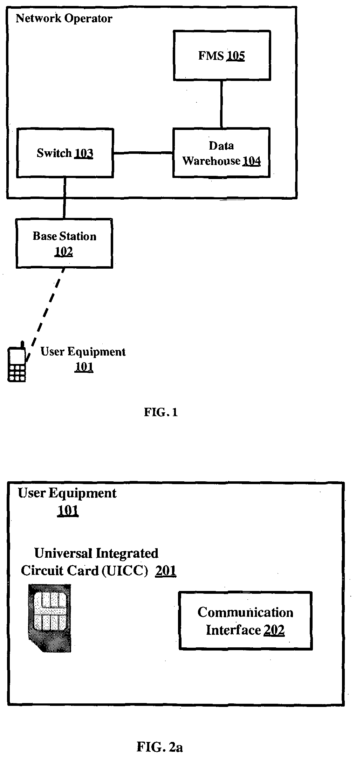

The embodiments herein achieve a method and system to monitor a subscriber of a communication network. Referring now to the drawings, and more particularly to FIGS. 1 through 7, where similar reference characters denote corresponding features consistently throughout the figures, there are shown preferred embodiments.

Subscriber herein may refer to a person who is accessing the communication network using a User Equipment (UE), a UE accessing the communication network, a network entity or any other entity authorized to avail services available on the communication network.

FIG. 1 depicts a User Equipment (UE) connected to a network operator, according to embodiments as disclosed herein. A UE 101 is connected to a network operator through a base station 102. The base station 102 may be at least one of a macro base station, a micro base station, an eNode-B, a femto base station, a pico base station or any other equivalent means to enable a UE 101 to connect to a network operator. The network operator comprises of a switch 103, a data warehouse 104 and a FMS 104.

The UE 101 comprises a revenue management module. The revenue management module is configured to profile the usage of the UE (by the subscriber or by any other authorized person/entity), behavior of the UE 101 with respect to network events. The revenue management module may store the information. The revenue management module takes at least one action with respect to a network event, on a pre-specified event occurring. The revenue management module sends an alert to the network operator on a pre-specified event occurring. The revenue management module sends information related to the usage of the UE 101, the network usage behavior of the UE 101 to the network operator.

The revenue management module may be present in the memory of the UE 101. In an embodiment, if the UE 101 comprises of a Universal Integrated Circuit Card (UICC), the revenue management module may be present in the UICC. The revenue management module may be invisible to the subscriber.

The revenue management module may be made available on the UE 101 using a suitable means such as Over the Air (OTA), a data channel, encrypted SMSs (Short Messaging Services), tone dialing, Dual-Tone Multi Frequency (DTMF) tones and so on. This may be done in a manner invisible to the subscriber. Consider the example of the revenue management module present on a UICC, which uses a Java Card Runtime Environment (JCRE) which includes a Java Card Virtual Machine and Java Card API classes, the revenue management module may use JCRE. In an embodiment, the network operator may provide the UE and/or the UICC, with the revenue management module present in the UE and/or the UICC. The revenue management module may also be updated and/or modified by the network operator using a suitable means such as OTA, a data channel, encrypted SMSs, tone dialing, DTMF tones and so on. This may be done in a manner invisible to the subscriber.

The revenue management module comprises of summarization rules, evaluation rules, pattern matching rules and at least one action to be taken on conditions associated with at least one rule being satisfied. The summarization rules are a summary of events occurring in terms of parameters for any network event which the subscriber performs using the UE 101 (wherein the network event may comprise of incoming calls from a specific entity, a call which exceeds a specific time period, outgoing calls to a specific entity, accessing an application on the UE 101, sending a message (Short Messaging Service (SMS), Multimedia Messaging Service (MMS), an Instant Message from the UE 101 or any other equivalent means to a specific entity and so on, installing/opening an app and so on), static information (threshold counts, list of suspect entities) and so on. The summarization rules comprises of heuristics and static information. Evaluation rules comprises of thresholds on summarized elements or rules for specific events occurring (examples of events are explained above). Examples of the threshold counts may be a limit on calls going to a specific entity, a large number of SMSs going to a specific entity, a very large number of SMSs being sent in a predefined period of time and so on. Examples of the suspect entities may comprise of a specific entity that is recognized as a fraudulent entity, an incoming call from a recognized telemarketer (when the subscriber is registered with a 'Do-Not-Disturb' database), a Uniform resource Locator (URL) identified as a phishing URL and so on. The summarization rules is modified and/or updated by the network operator at any point in time using a suitable means such as OTA, a data channel, encrypted SMSs, tone dialing, DTMF tones and so on. This may be done in a manner invisible to the subscriber.

The revenue management module captures a network event initiated on the UE 101. The network event is initiated by the subscriber of the UE 101, any other user of the UE 101, an application resident on the UE 101, the network operator or any entity capable of initiating a network event on the UE 101 for availing a service. The service may be at least one of voice calls, SMS, data and so on. Based on the summarization rules, the revenue management module performs an action related to the network event. For example, if the network event is the subscriber dialing a fraudulent entity, the revenue management module may block the call. The revenue management module makes an entry in the database through a communication channel in a network equipment using a suitable means such as OTA, a data channel, encrypted SMSs, tone dialing, DTMF tones and so on. This may be done in a manner invisible to the subscriber, wherein the entry comprises of details of the fraudulent entity, time the subscriber tried to dial the entity and so on.

The revenue management module creates a profile for the subscriber, based on the network events occurring on the UE 101. The revenue management module adds an entry for the network event, wherein the entry comprises type of network event, duration of network event, time the network event was initiated and so on. The network operator configures the type of network events to be profiled/monitored, based on the subscriber information present with the network operator, the plan to which the subscriber has subscribed and so on.

The revenue management module further sends the information from the UE 101 to the network operator. The information comprises of profile data for the subscriber, information related to the summarization rules and so on. The revenue management module sends the information at intervals, wherein the intervals may be defined by the network operator. The revenue management module sends the information on a pre-defined event occurring, wherein the event(s) may be defined by the network operator. The revenue management module sends the information on a single entry being updated, as defined by the network operator. The revenue management module sends the information on a pre-defined number of entries being updated, as defined by the network operator. The revenue management module sends the information to the network operator using a suitable means such as OTA, a data channel, encrypted SMSs, tone dialing, DTMF tones and so on. This may be done in a manner invisible to the subscriber.

The network operator may analyze the information for revenue maximization. The network operator may further analyze the information to maintain effectiveness and efficiency of the summarization rules.

FIG. 2a depicts a User Equipment (UE) comprising a Universal Integrated Circuit Card (UICC), according to embodiments as disclosed herein. The UE 101 comprises of a UICC 201 and a communication interface 202. The UICC 201 comprises of the revenue management module. The revenue management module may be invisible to the subscriber. The revenue management module communicates with the network operator via the communication interface 202, using a suitable means such as OTA, a data channel, encrypted SMSs, tone dialing, DTMF tones and so on. The communication between the revenue management module and the network operator may be done in a manner invisible to the subscriber. The revenue management module is also updated and/or modified by the network operator via the communication interface 202, using a suitable means such as Over the Air (OTA) , a data channel, encrypted SMSs, tone dialing, DTMF tones and so on. This may be done in a manner invisible to the subscriber.

The revenue management module further sends the information from the UE 101 to the network operator via the communication interface 202, using a suitable means such as OTA, a data channel, encrypted SMSs, tone dialing, DTMF tones and so on. The revenue management module may send the information at intervals, wherein the intervals may be defined by the network operator. This may be done in a manner invisible to the subscriber.

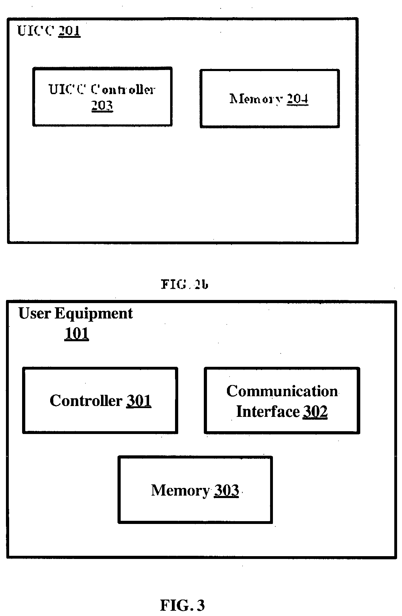

FIG. 2b depicts a Universal Integrated Circuit Card (UICC) comprising of a revenue management module, according to embodiments as disclosed herein. The UICC 201 comprises a UICC controller 203 and a memory 204. The revenue management module may be resident in the memory 204 and may be stored in a manner to be invisible to the subscriber, in accordance with GSM 11.11 and GSM 11.14 standards. The revenue management module may store information as an Elementary File (EF), which may be of fixed length format. The EF comprises of multiple records separated by a record separator, wherein each record will be for one type of profile element. Each record will contain fields of fixed length. Examples of fields which may be included in each record are profile element id, start time of profiling, end time of profiling, value of profile element, alerted flag and so on. The revenue management module may be stored in at least one of DFGSM or DFTelecom folders of the file system.

The UICC controller 203 on receiving the revenue management module stores the revenue management module in the appropriate destination folder, which may be indicated by the received revenue management module. On the UICC controller 203 receiving updates to the revenue management module, the UICC controller 203 updates the revenue management module accordingly.

On the revenue management module capturing a network event initiated on the UE 101, the revenue management module makes an entry in the memory 204, wherein the entry comprises of details of the fraudulent entity, time the subscriber tried to dial the entity and so on.

FIG. 3 depicts a LTE comprising a revenue management module, according to embodiments as disclosed herein. The UE 101 comprises of a controller 301, a communication interface 302 and a memory 303. The revenue management module is present as an application on the UE 101 and may be present in the memory 303. In an example, the application may be embedded the program in the ROM (Read Only Memory) and the application may be run as a root process. The revenue management module may be invisible to the subscriber. The revenue management module communicates with the network operator via the communication interface 302, using a suitable means such as OTA, a data channel, encrypted SMSs, tone dialing, DTMF tones and so on. The communication between the revenue management module and the network operator may be done in a manner invisible to the subscriber. The revenue management module may also be updated and/or modified by the network operator via the communication interface 302, using a suitable means such as Over the Air (OTA) , a data channel, encrypted SMSs, tone dialing, DTMF tones and so on. This may be done in a manner invisible to the subscriber.

The revenue management module further sends the information from the UE 101 to the network operator via the communication interface 302, using a suitable means such as OTA, a data channel, encrypted SMSs, tone dialing, DTMF tones and so on. The revenue management module may send the information at intervals, wherein the intervals may be defined by the network operator. This may be done in a manner invisible to the subscriber.

The controller 301 on receiving the revenue management module installs the revenue management module as an application, in a manner invisible to the subscriber. On the UICC controller 203 receiving updates to the revenue management module, the UICC controller 203 updates the application accordingly.

On the revenue management module capturing a network event initiated on the UE 101, the revenue management module makes an entry in the memory 303, wherein the entry comprises of details of the fraudulent entity, time the subscriber tried to dial the entity and so on.

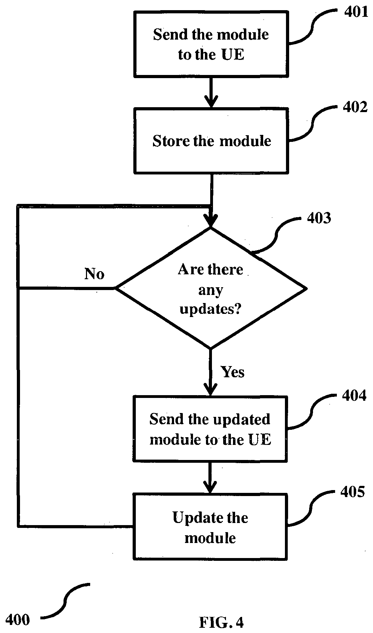

FIG. 4 is a flowchart illustrating a process of the revenue management module receiving rules received from a network operator and storing the rules, according to embodiments as disclosed herein. The network operator sends (401) the revenue management module to the UE 101. The network operators may send the revenue management module using a suitable means such as OTA, a data channel, encrypted SMSs, tone dialing, DTMF tones and so on. This may be done in a manner invisible to the subscriber. In an embodiment, the network operator may provide the UE and/or the UICC, with the revenue management module present in the UE and/or the UICC. On receiving the revenue management module from the network operator, the UE 101 stores (402) the revenue management module in the appropriate location, based on instructions provided by the network operator. The UE 101 may store the revenue management module in the UICC. The UE 101 may also install the revenue management module as an application on the UE 101. The revenue management module may be stored in a manner invisible to the subscriber. A check is maintained (403) for any updates to revenue management module. The revenue management module is configured to check for updates at periodic intervals or on a specific event occurring. The network operator is configured to push updates to the revenue management module, on an update being available. On updates being available, the updated revenue management module is send (403) to the UE 101. The UE 101 then updates (404) the revenue management module. The various actions in method 400 may be performed in the order presented, in a different order or simultaneously. Further, in some embodiments, some actions listed in FIG. 4 may be omitted.

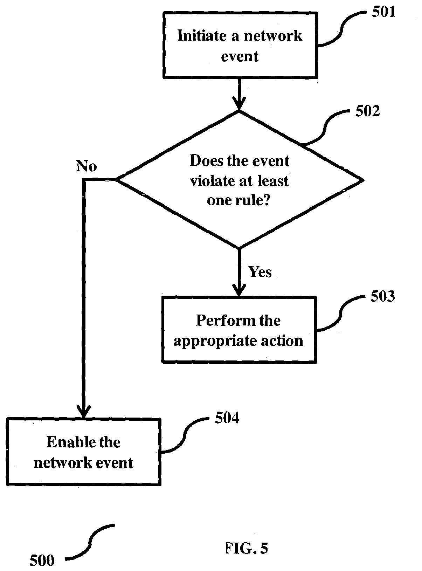

FIG. 5 is a flowchart illustrating a process of the revenue management module enforcing the rules on a subscriber availing services, according to embodiments as disclosed herein. On a network event being initiated (501) on the UE (wherein the network event may be initiated by the subscriber of the UE 101, any other user of the UE 101, an application resident on the UE 101, the network operator or any entity capable of initiating a network event on the UE 101), the revenue management module checks (502) if the event violates at least one summarization rule. For example, a call to a fraudulent entity, a visit to a URL of a phishing website, a large number of outgoing SMSs (wherein the number of SMSs is greater than a threshold as defined by the network operator) and so on. If the network event violates at least one summarization rule, the revenue management module performs (503) the pre-defined action. The pre-defined action comprises of at least one of blocking the network event, raising an alert with the network operator, making an entry in the memory and so on. If the network event does not violate at least one summarization rule, the revenue management module enables (504) the network event to proceed without recording of the event by the revenue management module. The various actions in method 500 may be performed in the order presented, in a different order or simultaneously. Further, in some embodiments, some actions listed in FIG. 5 may be omitted.

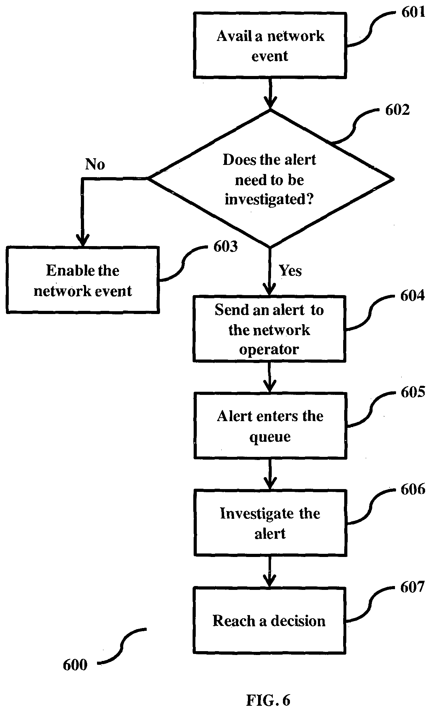

FIG. 6 is a flowchart illustrating the process of the revenue management module providing an alert to the network operator, according to embodiments as disclosed herein. On a network event being initiated (601) on the UE (wherein the network event may be initiated by the subscriber of the UE 101, any other user of the UE 101, an application resident on the UE 101, the network operator or any entity capable of initiating a network event on the UE 101), the revenue management module checks (602) if the event needs to be investigated. For example, if the event is a call to a fraudulent entity which charges for incoming calls, then the subscriber will be charged for the call. However, the subscriber may dispute the charge if the subscriber has not made the call. The network operator may have to reverse the charges, if the call was made fraudulently. If the network event does not need investigation, the revenue management module enables (603) the network event to proceed in a normal manner. If the event needs to be investigated, the revenue management module sends (604) an alert to the network operator. In an example, the alert may comprise of the Unique Id of the subscriber (which may be at least one of IMSI/Phone Number), Profile Id/Rule Id, Start time of violation, End time of violation, Value of Profile, time of transmission of the alert and so on. The alert enters (605) a queue at the network operator. The network operator investigates (606) the alert, if there is a possibility of a fraud occurring and based on the investigation, the network operator reaches (607) a decision. The decision may be reflected using an appropriate means to the subscriber. The charges to be paid by the subscriber may be updated accordingly. The various actions in method 600 may be performed in the order presented, in a different order or simultaneously. Further, in some embodiments, some actions listed in FIG. 6 may be omitted.

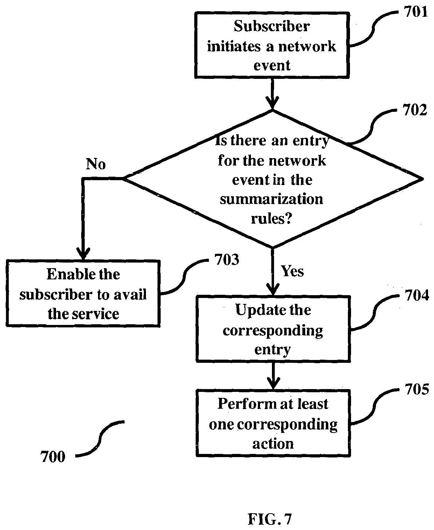

FIG. 7 is a flowchart illustrating the process of maintaining a profile for the subscriber, according to embodiments as disclosed herein. On a network event being initiated (701) on the UE (wherein the network event may be initiated by the subscriber of the UE 101, any other user of the UE 101, an application resident on the UE 101, the network operator or any entity capable of initiating a network event on the UE 101), the revenue management module checks (702) if there is an entry for the event in the summarization rules. For example, an outgoing call, a visit to a URL, an international call, an outgoing SMS and so on. If the network event matches at least one summarization rule, the revenue management module updates (704) the corresponding entry and enables (703) the network event to proceed in a normal manner. An example of the update for an outgoing call may be duration of the call, the called entity, the start time of the call, the end time of the call and so on. Another example of the update for an outgoing SMS may be destination of the SMS, time the SMS was sent and so on. If the network event does not match at least one summarization rule, the revenue management module enables (703) the network event to proceed in a normal manner. The revenue management module further sends (705) the information from the UE 101 to the network operator. The revenue management module may send the information at intervals, wherein the intervals may be defined by the network operator. The revenue management module may send the information on a pre-defined event occurring, wherein the event(s) may be defined by the network operator. The revenue management module may send the information to the network operator using a suitable means such as OTA, a data channel, encrypted SMSs, tone dialing, DTMF tones and so on. This may be done in a manner invisible to the subscriber. The various actions in method 700 may be performed in the order presented, in a different order or simultaneously. Further, in some embodiments, some actions listed in FIG. 7 may be omitted.

The embodiments disclosed herein can be implemented through at least one software program running on at least one hardware device and performing network management functions to control the network elements. The network elements shown in Figs. 1, 2a, 2b and 3 include blocks which can be at least one of a hardware device, or a combination of hardware device and software module.

Embodiments disclosed herein enable the network operator to collect and profile usage information of a subscriber on the UE with the intention of using the information for revenue maximization applications, wherein the revenue maximization applications include but are not limited to fraud management, revenue assurance, churn management, customer experience management, credit risk management and partner settlement.

## Claims

1. A method for managing a subscriber access of a User Equipment, UE, (101) to at least one service in a communication network, wherein the User Equipment, UE, (101) comprises a revenue management module, for profiling a usage of behavior of the LTE (101) with respect to network events based on stored summarization rules specified by a network operator of the UE (101), the method comprising:
initiating (501), by the revenue management module, at least one network event;
checking (502), by the revenue management module, whether the at least one network event violates at least one summarization rule, wherein the summarization rule comprises heuristics and static information;
performing, by the revenue management module, at least one action, if the at least one network event violates the at least one summarization rule;
creating, by the revenue management module, a profile for the subscriber based on the at least one network event occurring on the UE (101) and adding an entry in a database for the at least one network event;
checking (702), by the revenue management module, if there is the entry for the at least one network event in the at least one summarization rule;
updating (704) the entry by the revenue management module and enabling the at least one network event to proceed in a normal manner, if the at least one network event matches the at least one summarization rule;
enabling, by the revenue management module, the at least one network event to proceed without recording of the at least one network event, if the at least network event does not violate the at least one summarization rule; and
sending, by the revenue management module, the information from the UE (101) to the network operator.

2. The method, as claimed in claim 1, wherein the method comprises at least one of modifying and updating, by a network operator, the at least one summarization rule.

3. The method, as claimed in claim 1, wherein the at least one action includes at least one of blocking the at least one network event; and sending an alert an operator of the network.

4. A User Equipment, UE, (101) for managing a subscriber access to at least one service in a communication network, the User Equipment, UE, (101) comprising:
a controller (203);
a memory (303) comprising a revenue management module for profiling a usage of behavior of the UE with respect to network events based on stored summarization rules specified by a network operator of the UE (101), wherein the revenue management module is to:
initiate (501) at least one network event;
check (502) whether the at least one network event violates at least one summarization rule, wherein the summarization rule comprises heuristics and static information;
perform at least one action, if the at least one network event violates the at least one summarization rule;
create a profile for the subscriber based on the at least one network event occurring on the UE (101) and adding an entry in a database for the at least one network event;
check (702) if there is the entry for the at least one network event in the at least one summarization rule;
update (704) the entry and enabling the at least one network event to proceed in a normal manner, if the at least one network event matches the at least one summarization rule;
enable (703) the at least one network event to proceed without recording the at least one network event, if the at least one network event does not violate the at least one summarization rule; and
send the information from the UE (101) to the network operator.

5. The User Equipment (101), as claimed in claim 4, wherein the revenue management module is to receive the at least one summarization rule from an operator of a network using at least one of an Over The Air, OTA, interface, a data channel between the operator and the User Equipment (101), an encrypted Short Messaging Service, SMS, and tone dialing.

6. The User Equipment (101), as claimed in claim 4, wherein the revenue management module is to perform the at least one action by one or more of:
blocking the at least one network event; and
sending an alert to the operator of the network.

7. The User Equipment (101), as claimed in claim 4, wherein the User Equipment (101) is a Universal Integrated Circuit Card, UICC.

8. A system for managing a subscriber access to at least one service, said system comprising a communication network and a User Equipment, UE, (101), as claimed in claim 4.

## Patentansprüche

1. Verfahren zur Verwaltung eines Teilnehmerzugangs eines Benutzerendgeräts, UE, (101) zu mindestens einem Dienst in einem Kommunikationsnetzwerk, wobei das Benutzerendgerät, UE, (101) ein Umsatzverwaltungsmodul aufweist, um ein Profil zum Nutzungsverhalten des UE (101) in Bezug auf Netzwerkereignisse basierend auf gespeicherten Summierungsregeln zu erstellen, die von einem Netzwerkbetreiber des UE (101) festgelegt werden, wobei das Verfahren umfasst:
Initiieren (501) mindestens eines Netzwerkereignisses mittels des Umsatzverwaltungsmoduls;
Prüfen (502), mittels des Umsatzverwaltungsmoduls, ob das mindestens eine Netzwerkereignis gegen mindestens eine Summierungsregel verstößt, wobei die Summierungsregel Heuristiken und statische Informationen umfasst;
Durchführen mindestens einer Aktion mittels des Umsatzverwaltungsmoduls, wenn das mindestens eine Netzwerkereignis gegen die mindestens eine Summierungsregel verstößt;
Erstellen eines Profils für den Teilnehmer basierend auf dem mindestens einen Netzwerkereignis, das auf dem UE (101) auftritt, mittels des Umsatzverwaltungsmoduls, und Hinzufügen eines Eintrags in einer Datenbank für das mindestens eine Netzwerkereignis;
Prüfen (702), mittels des Umsatzverwaltungsmoduls, ob es einen Eintrag für das mindestens eine Netzwerkereignis in der mindestens einen Summierungsregel gibt;
Aktualisieren (704) des Eintrags mittels des Umsatzverwaltungsmoduls und Ermöglichen des normalen Fortgangs des Netzwerkereignisses;
Ermöglichen, mittels des Umsatzverwaltungsmoduls, dass das mindestens eine Netzwerkereignis fortfahren kann, ohne das mindestens eine Netzwerkereignis aufzuzeichnen, wenn das mindestens eine Netzwerkereignis nicht gegen die mindestens eine Summierungsregel verstößt; und
Senden der Informationen mittels des Umsatzverwaltungsmoduls von dem UE (101) an den Netzwerkbetreiber.

2. Verfahren nach Anspruch 1, wobei das Verfahrens mindestens eines aus Modifizieren und Aktualisieren der mindestens einen Summierungsregel mittels des Umsatzverwaltungsmoduls umfasst.

3. Verfahren nach Anspruch 1, wobei die mindestens eine Aktion mindestens eines aus Blockieren des mindestens einen Netzwerkereignisses und Senden einer Warnung an den Betreiber des Netzwerks umfasst.

4. Benutzerendgerät, UE, (101) zur Verwaltung eines Teilnehmerzugangs zu mindestens einem Dienst in einem Kommunikationsnetzwerk, wobei das Benutzerendgerät, UE, (101) aufweist:
eine Steuerung (203);
einen Speicher (303), der ein Umsatzverwaltungsmodul aufweist, um ein Profil zum Nutzungsverhalten des UE in Bezug auf Netzwerkereignisse basierend auf gespeicherten Summierungsregeln zu erstellen, die von einem Netzwerkbetreiber des UE (101) festgelegt werden, wobei das Umsatzverwaltungsmodul für Folgendes verwendet wird:
Initiieren (501) mindestens eines Netzwerkereignisses;
Prüfen (502), ob das mindestens eine Netzwerkereignis gegen mindestens eine Summierungsregel verstößt, wobei die Summierungsregel Heuristiken und statische Informationen umfasst;
Durchführen mindestens einer Aktion, wenn das mindestens eine Netzwerkereignis gegen die mindestens eine Summierungsregel verstößt;
Erstellen eines Profils für den Teilnehmer basierend auf dem mindestens einen Netzwerkereignis, das auf dem UE (101) auftritt, und Hinzufügen eines Eintrags in einer Datenbank für das mindestens eine Netzwerkereignis;
Prüfen (702), ob es einen Eintrag für das mindestens eine Netzwerkereignis in der mindestens einen Summierungsregel gibt;
Aktualisieren (704) des Eintrags und Ermöglichen des normalen Fortgangs des mindestens einen Netzwerkereignisses, wenn das mindestens eine Netzwerkereignis mit der mindestens einen Summierungsregel übereinstimmt;
Ermöglichen (703), dass das mindestens eine Netzwerkereignis fortfahren kann, ohne das mindestens eine Netzwerkereignis aufzuzeichnen, wenn das mindestens eine Netzwerkereignis nicht gegen die mindestens eine Summierungsregel verstößt; und
Senden der Informationen von dem UE (101) an den Netzwerkbetreiber.

5. Benutzerendgerät (101) nach Anspruch 4, wobei das Umsatzverwaltungsmodul dazu dient, die mindestens eine Summierungsregel von einem Betreiber eines Netzwerks zu erhalten, und zwar unter Verwendung von mindestens einem aus einer Over-the-Air-(OTA)-Schnittstelle, einem Datenkanal zwischen dem Betreiber und dem Benutzerendgerät (101), einem verschlüsselten Kurznachrichtendienst, SMS, und Tonwahl.

6. Benutzerendgerät (101) nach Anspruch 4, wobei das Umsatzverwaltungsmodul dazu dient, die mindestens eine Aktion durch eines oder mehreres aus Folgendem durchzuführen:
Blockieren des mindestens einen Netzwerkereignisses; und
Senden einer Warnung an den Betreiber des Netzwerks.

7. Benutzerendgerät (101) nach Anspruch 4, wobei das Benutzerendgerät (101) eine Universal Integrated Circuit Card, UICC, ist.

8. System zur Verwaltung eines Teilnehmerzugangs zu mindestens einem Dienst, wobei das System ein Kommunikationsnetzwerk und ein Benutzerendgerät (UE), (101) nach Anspruch 4 aufweist.

## Revendications

1. Procédé permettant de gérer un accès d'abonné d'un équipement utilisateur, UE, (101) à au moins un service dans un réseau de communication, l'équipement utilisateur, UE, (101) comprenant un module de gestion de revenus, permettant d'établir le profil d'un usage de comportement de l'UE (101) par rapport à des événements de réseau en fonction de règles de synthèse stockées spécifiées par un opérateur de réseau de l'UE (101), le procédé comprenant :
l'initiation (501), par le module de gestion de revenus, d'au moins un événement de réseau ;
le fait de vérifier (502), par le module de gestion de revenus, si l'au moins un événement de réseau enfreint au moins une règle de synthèse, la règle de synthèse comprenant une heuristique et des informations statiques ;
la mise en oeuvre, par le module de gestion de revenus, d'au moins une action, si l'au moins un événement de réseau enfreint l'au moins une règle de synthèse ;
la création, par le module de gestion de revenus, d'un profil pour l'abonné en fonction de l'au moins un événement de réseau se produisant sur l'UE (101) et l'ajout d'une entrée dans une base de données pour l'au moins un événement de réseau ;
le fait de vérifier (702), par le module de gestion de revenus, s'il y a l'entrée pour l'au moins un événement de réseau dans l'au moins une règle de synthèse ;
la mise à jour (704) de l'entrée par le module de gestion de revenus et le fait permettre à l'au moins un événement de réseau de se dérouler d'une manière normale, si l'au moins un événement de réseau correspond à l'au moins une règle de synthèse ;
le fait de permettre, par le module de gestion de revenus, à l'au moins un événement de réseau de se dérouler sans enregistrement de l'au moins un événement de réseau, si l'au moins un événement de réseau n'enfreint pas l'au moins une règle de synthèse ; et
l'envoi, par le module de gestion de revenus, des informations provenant de l'UE (101) à l'opérateur de réseau.

2. Procédé, selon la revendication 1, le procédé comprenant au moins l'une parmi une modification et une mise à jour, par un opérateur de réseau, de l'au moins une règle de synthèse.

3. Procédé, selon la revendication 1, dans lequel l'au moins une action comporte au moins l'un parmi le blocage de l'au moins un événement de réseau ; et l'envoi d'une alerte à un opérateur du réseau.

4. Équipement utilisateur, UE, (101) permettant de gérer un accès d'abonné à au moins un service dans un réseau de communication, l'équipement utilisateur, UE, (101) comprenant :
un organe de commande (203) ;
une mémoire (303) comprenant un module de gestion de revenus permettant d'établir le profil d'un usage de comportement de l'UE par rapport à des événements de réseau en fonction de règles de synthèse stockées spécifiées par un opérateur de réseau de l'UE (101), le module de gestion de revenus servant à :
initier (501) au moins un événement de réseau ;
vérifier (502) si l'au moins un événement de réseau enfreint au moins une règle de synthèse, la règle de synthèse comprenant une heuristique et des informations statiques ;
mettre en oeuvre au moins une action, si l'au moins un événement de réseau enfreint l'au moins une règle de synthèse ;
créer un profil pour l'abonné en fonction de l'au moins un événement de réseau se produisant sur l'UE (101) et ajouter une entrée dans une base de données pour l'au moins un événement de réseau ;
vérifier (702) s'il y a l'entrée pour l'au moins un événement de réseau dans l'au moins une règle de synthèse ;
mettre à jour (704) l'entrée et permettre à l'au moins un événement de réseau de se dérouler d'une manière normale, si l'au moins un événement de réseau correspond à l'au moins une règle de synthèse ;
permettre (703) à l'au moins un événement de réseau de se dérouler sans enregistrement de l'au moins un événement de réseau, si l'au moins un événement de réseau n'enfreint pas l'au moins une règle de synthèse ; et
envoyer les informations provenant de l'UE (101) à l'opérateur de réseau.

5. Équipement utilisateur (101), selon la revendication 4, dans lequel le module de gestion de revenus sert à recevoir l'au moins une règle de synthèse provenant d'un opérateur d'un réseau à l'aide d'au moins l'un parmi une interface par voie hertzienne, OTA, un canal de données entre l'opérateur et l'équipement utilisateur (101), un service de messages courts, SMS, chiffré et une numérotation en fréquences vocales.

6. Équipement utilisateur (101), selon la revendication 4, dans lequel le module de gestion de revenus sert à mettre en oeuvre l'au moins une action par un ou plusieurs parmi :
le blocage de l'au moins un événement de réseau ; et
l'envoi d'une alerte à l'opérateur du réseau.

7. Équipement utilisateur (101), selon la revendication 4, l'équipement utilisateur (101) étant une carte à circuit intégré universelle, UICC.

8. Système permettant de gérer un accès d'abonné à au moins un service, ledit système comprenant un réseau de communication et un équipement utilisateur, UE, (101), selon la revendication 4.
